# FASCICULE DE BREVET EUROPEEN

(11) **EP 3 215 375 B1**
(45) Date de publication et mention de la délivrance du brevet: **06.03.2019**
(21) Numéro de dépôt: 15787966.9
(22) Date de dépôt: 27.10.2015
(51) Int. Cl.: B60C 23/00, B60C 23/10, B60C 23/12

(54) **SYSTEME DE TELEGONFLAGE POUR VEHICULE ET PROCEDE POUR UN TEL SYSTEME**
DRUCKSTEUEREINRICHTUNG UND -VERFAHREN FÜR EINE REIFENFÜLLANLAGE
SYSTEM AND METHOD FOR TIRE INFLATING

(30) Priorité: 07.11.2014 FR 1460776
(43) Date de publication de la demande: 13.09.2017
(73) Titulaire: Compagnie Générale des Etablissements Michelin, 63000 Clermont-Ferrand (FR)
(72) Inventeur: VERVAET, Patrick, F-63040 Clermont-Ferrand Cedex 9 (FR); MATYAS, Istvan, F-63040 Clermont-Ferrand Cedex 9 (FR); LHOSPITALIER, Denis, F-63040 Clermont-Ferrand Cedex 9 (FR)
(74) Mandataire: Millanvois, Patrick Jacques Jean
(86) Numéro de dépôt international: PCT/EP2015/074866
(87) Numéro de publication internationale: WO 2016/071158

(56) Documents cités:
- WO-A1-00/34060
- FR-A1- 2 643 313
- US-B1- 6 212 464
- US-B1- 6 236 923

## Description

La présente invention concerne un système de télégonflage pour un véhicule destiné à rouler sur des sols de natures différentes, tels qu'un véhicule agricole, forestier ou de génie civil. Elle concerne également un procédé de détermination de consigne pour un dispositif de télégonflage. Elle est plus particulièrement décrite pour un véhicule agricole mais applicable à tout type de véhicule muni de pneumatiques.

Un système de télégonflage vise à améliorer les performances de tels véhicules en fonction des caractéristiques de la surface sur laquelle ils se déplacent, nommée sol de roulage. Les performances optimisées sont variables selon le besoin en temps réel de l'utilisateur, par exemple la consommation d'énergie, la capacité de traction, l'absence d'impact sur le sol de roulage, la vitesse du véhicule, le comportement dynamique du véhicule.

Par véhicule agricole, nous entendons toute machine motorisée utilisée lors d'un travail agricole tel que sans être exhaustif, les tracteurs, les semoirs, les moissonneuses-batteuses, les épandeurs, les ensileuses, les pulvérisateurs ainsi que tout assemblage de ces véhicules avec un outil, tel que sans être exhaustif, fourches, emballeurs, faux, araires, charrues, herses, déchaumeur, épandeur, broyeur, arracheuse, planteuse ou une remorque, à la condition qu'il existe au moins un pneumatique sur ledit véhicule.

La pression des pneumatiques du véhicule impacte en particulier ses performances en traction, en adhérence, en stabilité et en consommation.

Par exemple, l'aire de contact du pneumatique et donc le nombre de blocs de sculpture de la bande de roulement, en contact avec le sol dépend de la pression, ce qui conditionne la performance du véhicule en traction.

La pression a également une influence sur la rigidité du pneumatique et donc sur le comportement dynamique du véhicule et donc sur sa stabilité.

Cette rigidité dépend des paramètres de conception du pneumatique suivants :
- nombre de couches de l'armature de carcasse et de l'armature de sommet, caractéristiques mécaniques de leurs matériaux constitutifs respectifs,
- volumes et caractéristiques mécaniques des matériaux élastomériques constitutifs de la bande de roulement et des autres parties du pneumatique,
- caractéristiques de la bande de roulement, taux d'entaillement volumique, forme et agencement des blocs de sculpture....

La rigidité d'un pneumatique en fonction de la pression peut être mesurée en roulage sur des machines spécifiques. Ces caractéristiques sont par ailleurs utilisées pour comprendre voire éviter des problèmes de résonnance dynamique sur les véhicules.

La pression influence également la résistance au roulement du pneumatique, d'autant plus importante que les déformations du pneumatique en roulage sont importantes. La résistance au roulement est un paramètre influant sur la consommation en carburant du véhicule.

Par ailleurs, pour un sol de roulage donné, pour un intervalle de pression dans le pneumatique donné, plus le pneumatique est rigide, plus la résistance au roulement est faible. Mais une telle propriété n'est vraie que tant que l'effort de contact du sol et du pneumatique permet de transmettre le couple nécessaire au véhicule pour avancer. L'effort maximal de contact dépend de la taille de l'aire de contact, de la pression de contact, du coefficient de frottement entre les matériaux en contact. Si l'effort de couple du véhicule dépasse l'effort maximal de contact, le pneumatique glisse et l'énergie correspondante est perdue par frottement. Il existe donc une zone de pression au-delà de laquelle, la résistance au roulement augmente avec la pression du pneumatique.

De plus, les sols meubles génèrent par leur déformation sous l'action du pneumatique, une perte d'énergie, appelée résistance à l'avancement du sol. Plus la pression du pneumatique est élevée plus la pression locale dans l'aire de contact est élevée, plus la résistance à l'avancement du sol est élevée. Par sol meuble, on désigne un sol tel que sa déformation au passage du pneumatique est d'un ordre de grandeur comparable à la flèche du véhicule, la flèche étant la déformation radiale maximale du véhicule exprimée en unité de longueur. Par définition, les véhicules agricoles travaillent en partie sur des sols meubles

En fonction de ces trois composantes de la résistance à l'avancement totale, la résistance au roulement, la résistance à l'avancement du sol et le glissement, il existe donc un optimum de la pression du pneumatique permettant de minimiser la consommation du véhicule selon les caractéristiques du sol (adhérence, rigidité, température) et des caractéristiques du pneumatique (adhérence, rigidité).

En revanche, notamment pour des raisons économiques liées aux coûts de main d'oeuvre, à l'immobilisation du capital financier que représente une machine comparativement au coût de l'énergie, des données légales sur le temps de travail hebdomadaire ou pour tout autre raison, l'utilisateur du véhicule peut souhaiter non pas optimiser les performances de son véhicule en termes de consommation d'énergie mais en fonction d'un critère liant la consommation d'énergie et la durée de la tâche à accomplir. Dans un tel cas, la vitesse optimale du véhicule sera déterminée via un calcul intégrant également les paramètres du pneumatique.

De plus les propriétés du sol de roulage change par l'effet de la pression appliquée. Sous la pression du pneumatique, la densité locale du sol de roulage augmente rendant le sol moins friable, moins perméable et donc moins adapté à certains travaux agricoles notamment les labours et moins adapté à la croissance des végétaux. Ce phénomène bien connu est nommé compactage du sol. Pour éviter les effets négatifs du compactage du sol, il est nécessaire de limiter la pression du pneumatique en fonction du type de travail réalisé et donc de l'outil utilisé.

Pour améliorer le fonctionnement des véhicules agricoles ou forestiers, ceux-ci ont été dotés de systèmes de télégonflage qui permettent à l'utilisateur de choisir, depuis le véhicule, une pression d'usage FR2643313A1, WO00/34060A1 en accord avec le préambule de la revendication 1, ou pilotée par un détecteur de vitesse US6212464B1, par une mesure de densité du sol US6236923B1. De plus, la pression des pneumatiques étant déterminante pour le rendement des opérations agricoles, les normes de la European Technical Rim and Tyre Organization (ETRTO) définissent plusieurs courbes donnant la charge maximale et la pression préconisée en fonction de la vitesse du véhicule. Certains pneumatiques agricoles peuvent en effet fonctionner à des pressions inférieures à 1 bar alors que d'autres pneumatiques de même dimension fonctionnent au-delà de 1,6 bar. Ces différences de points de fonctionnement sont d'ailleurs l'origine de la création de normes d'indices de surcharge (Normes ETRTO : IF ou VF). Etant donné la multiplicité des paramètres intervenant dans la détermination de l'optimum global de la pression des pneumatiques, les connaissances de l'utilisateur sont insuffisantes. C'est pourquoi il existe dans l'état de la technique de nombreuses inventions dédiées à la recherche de cet optimum.

Par ailleurs, au cours du même travail agricole, les pressions optimales des pneumatiques, pour un ensemble de performances choisies, varient en fonction des conditions extérieures. Ces variations incluent les variations de conditions météorologiques, mais aussi les caractéristiques du véhicule ou de l'outil associé qui évoluent au cours du travail, comme par exemple, la masse d'un outil d'épandage ou d'une remorque de récolte qui respectivement s'allège ou s'alourdit pendant le travail. C'est pourquoi le télégonflage se doit de délivrer une consigne de pression recalculée en fonction de ces changements de paramètres.

Le document US6212464 présente notamment le pilotage de la pression des pneumatiques par la recherche d'un taux de glissement compris entre 10 à 12%. Le taux de glissement est calculé à l'aide de la différence entre la vitesse réelle mesurée par géolocalisation par satellite et celle évaluée par le véhicule en fonction du nombre de tours de roue.

Le document US6144295 propose une régulation de la pression des pneumatiques du véhicule en fonction de la charge du véhicule.

Le document WO2013/025898 décrit une invention définissant la pression des pneumatiques du véhicule notamment en fonction de sa géolocalisation et de la nature des sols. La pression est extraite d'une base de données prenant en compte cette géolocalisation et certaines propriétés du sol de roulage mesurées par des capteurs positionnés sur le véhicule.

Cependant aucun des systèmes décrits dans ces différents documents ne prend en compte les caractéristiques des pneumatiques comme paramètres de régulation de leur pression, ce qui ne permet pas de déterminer l'optimum global de fonctionnement du véhicule, mais uniquement un ensemble de paramètres plus performants qu'un ensemble de paramètres fixés a priori.

Les inventeurs se sont donné pour objectif d'améliorer le télégonflage des véhicules agricoles en temps réel, c'est-à-dire au cours de l'utilisation du véhicule.

Cet objectif est atteint par un système de télégonflage pour véhicule agricole équipé de pneumatiques, comprenant :
- Au moins un dispositif de télégonflage d'un pneumatique,
- Des moyens de détermination d'une consigne de pression pour le dispositif de télégonflage,
- Des moyens de détermination des caractéristiques d'un pneumatique dont la pression est destinée à être régulée par le dispositif de télégonflage,
- Des moyens de détermination de la vitesse du véhicule,
- Des moyens de calcul de la consigne de pression dudit pneumatique en fonction des caractéristiques dudit pneumatique et de la vitesse, déterminées au cours des étapes précédentes.
   - Les moyens de détermination des caractéristiques d'un pneumatique comprennent des moyens de lecture d'un identifiant du pneumatique et des moyens d'association de cet identifiant aux caractéristiques du pneumatique enregistrées dans une base de données.

Dans la suite de la description, on utilisera indifféremment les expressions de "régulateur de pression" et de "dispositif de télégonflage" pour désigner le même objet. Le système de télégonflage possède au moins des moyens de détermination d'une consigne de pression à délivrer pour un régulateur de pression. Dans sa réalisation la plus simple, la pression des pneumatiques est fonction de la valeur délivrée par le régulateur de pression sans mesure de la pression réelle dans les pneumatiques. Dans un système plus complexe mais qui garantit également mieux la régulation de la pression des pneumatiques à sa valeur optimale, le système est muni d'au moins un capteur de pression, installé soit au niveau de chacun des pneumatiques, soit au niveau des tuyaux d'alimentation des pneumatiques en gaz de gonflage. Ce capteur renvoie cette information au régulateur qui comprend des moyens pour comparer la valeur donnée par la consigne et la valeur réelle et pour adapter la valeur de la pression délivrée. Ce type de bouclage permet notamment de prendre en compte les phénomènes de variation de la pression en fonction de la température du gaz de gonflage qui peut varier soit en raison de l'utilisation du pneumatique soit en fonction de la température extérieure.

Le système de télégonflage délivre au moins une consigne pour le gonflage d'au moins un pneumatique du véhicule. Dans sa version optimale, il délivre une consigne adaptée pour chaque pneumatique du véhicule, pneumatique de la machine autotractée et de l'outil ou de la remorque associée le cas échéant. Le fonctionnement de la machine agricole est optimal si les pressions de tous ses pneumatiques sont optimisées. Cela implique que le système de télégonflage tient compte notamment de la position du pneumatique sur le véhicule. Dans la position du pneumatique, nous entendons toute information utile à l'évaluation de la consigne. En effet la position du pneumatique sur le véhicule implique plusieurs caractéristiques comme par exemple :
- celles liées à l'essieu sur lequel le pneumatique est monté, comme sa fonction, par exemple motrice, porteuse, directrice qui implique des performances attendues différentes donc des optimums de pression différents, ou comme sa position sur le véhicule comme par exemple avant, arrière, ou le numéro de l'essieu pour les véhicules à essieux multiples, qui subissent des transferts de charge différents,
- celles liées à la position latérale du pneumatique vis-à-vis du véhicule qui influence la compensation de pression éventuelle liée au dévers du sol de roulage,
- celles liées à la position du pneumatique en cas de monte multiple, car compte tenu de la déformation de l'essieu ou du dévers du sol de roulage, la charge appliquée est différente si le pneumatique occupe la position intérieure, extérieure ou une position intermédiaire dans le cas où la monte multiple comporte plus de deux pneumatiques. Par monte multiple, on entend l'association de plusieurs pneumatiques à une extrémité d'un essieu.

Les caractéristiques du ou des pneumatiques du véhicule sont données par le fabricant desdits pneumatiques. Ces caractéristiques sont, par exemple, les dimensions, les rigidités du pneumatique, son éventuel indice de surcharge, sa résistance au roulement, son adhérence en fonction de la vitesse, de la position du pneumatique sur le véhicule, de la pression, du type de sol, de la charge appliquée, ou tout autre performance des pneumatiques en fonction de tous les paramètres d'usage.

La vitesse du véhicule peut être déterminée par tout moyen, notamment par géolocalisation, par le véhicule en fonction du nombre de tours de roue, par système d'onde, radar, capteur doppler.

Le calcul de la consigne est effectué via tout système de calcul connu, tels que abaque, modélisation, réseau de neurones.

La détermination des caractéristiques du pneumatique dont la pression est destinée à être régulée par le système de télégonflage, se fait en entrant un identifiant du pneumatique dans une base de données. Cet identifiant est donné par le fabriquant du pneumatique ou celui du système de télégonflage au moyen d'un support d'information, hors de, dans ou sur le pneumatique. L'identifiant peut être soit entré par l'utilisateur, soit lu par laser via un code barre ou par un capteur optique via un code barre matriciel dit QR code, ou via une puce d'identification par radiofréquence (RFID) placée dans le pneumatique avec un lecteur associé, ou bien encore par un dispositif de communication proche de type NFC (Near Field Communication), lui-même pouvant être mobile ou à proximité des pneumatiques pour une lecture en continu, à savoir près des passages de roue. Le lecteur de l'identifiant transmet au système préférentiellement à l'aide d'une technologie de transmission de données sans fil. La base de données est localisée soit dans le véhicule soit hors du véhicule et est dans ce dernier cas accessible par tout moyen de communication à distance comme par exemple les ondes radios, un système wifi. La base de données contient toutes ou parties des données permettant l'amélioration de la consigne de télégonflage, par exemple les dimensions des pneumatiques, des abaques d'utilisation « charge, pression, vitesse », des caractéristiques d'adhérence en fonction du sol.

Pour garantir l'exactitude des informations données au système de télégonflage compte tenu que les pneumatiques sont un élément de la sécurité des véhicules, il est préférable que le moyen d'identification du pneumatique soit indissociable de celui-ci. Par indissociable nous entendons tel qu'il n'est pas possible de séparer le pneumatique de son identifiant sans prélever de la matière à une distance supérieure à 0,5 mm de la surface externe du pneumatique. La lecture de l'identifiant du pneumatique peut être systématique à chaque détermination de la consigne ou enregistrée par le système tant que le système est allumé ou tant que la consigne ne passe pas par zéro.

Cette invention permet de déterminer l'optimum global de fonctionnement du véhicule, en pilotant le télégonflage en prenant en compte les caractéristiques intrinsèques du pneumatique.

Avantageusement les moyens de détermination d'une consigne de pression du système de télégonflage comprennent en outre des moyens de détermination d'au moins une caractéristique du sol de roulage. Cette détermination peut se faire soit par le choix de l'utilisateur d'un type prédéterminé de sol tels que route, chemin, sol meuble, soit par tout type de capteurs permettant de déterminer la caractéristique recherchée comme par exemple sa rigidité, sa compacité, son humidité, sa température, son dévers, la capacité mécanique du sol à résister au compactage. La rigidité du sol impacte la surface de l'aire de contact et donc, entre autres, la résistance au roulement et l'adhérence. L'utilisateur peut désirer ne pas dépasser la compacité existante du sol et une mesure de cette caractéristique peut donner une valeur de la pression maximale admissible. Cette compacité est mesurable avec une sonde-pénétromètre. L'humidité influence l'adhérence. Le dévers influence les transferts de charge que subissent les différents pneumatiques du véhicule et sa connaissance permet de déterminer les pressions optimales des différents pneumatiques du véhicule.

Il est particulièrement avantageux que les moyens de détermination d'une consigne de pression pour le dispositif de télégonflage comprennent en outre des moyens d'enregistrement d'au moins une consigne du conducteur. Outre la nature du sol pouvant être indiquée par le conducteur, les consignes entrées par l'utilisateur peuvent de manière non exclusive inclure les outils tractés ou portés par le véhicule, type de critère d'amélioration de la consigne de pression comme par exemple l'économie d'énergie, la durée de la tâche, le compactage maximal du sol, le confort, la vitesse de travail ou tout compromis entre ces performances pouvant s'exprimer par une fonction de ces dernières. La consigne sera préférentiellement exprimée dans le langage du métier de l'utilisateur.

Le type d'outil utilisé est également utile pour l'amélioration de la consigne de la pression des pneumatiques : par exemple les travaux réalisés avec une charrue demandent un effort de couple important, les travaux réalisés avec un semoir demandant essentiellement un respect des sols à couple modéré, les travaux effectués avec une remorque impliquant une capacité de charge, de la vitesse et un bon comportement. Il est donc également avantageux que les moyens de détermination d'une consigne de pression pour le dispositif de télégonflage comprennent des moyens de détermination des caractéristiques d'un outil installé sur ledit véhicule. Si ledit outil est muni d'un pneumatique, la pression de celui-ci peut être également régulée au moyen de l'invention.

Les moyens de détermination de la consigne de pression d'un système de télégonflage selon l'invention comprennent également avantageusement des moyens de détermination de la charge appliquée au pneumatique car la charge est un paramètre de détermination de la pression optimale préconisée par les fabricants de pneumatiques. Elle est en relation directe avec la flèche et la diminution de l'aire de contact. Elle influence la résistance au roulement, l'adhérence, l'endurance des pneumatiques. Cette détermination est dans le cas le plus avantageux fournie pour chaque pneumatique régulé par le système de télégonflage au moyen d'un capteur d'effort, ou d'une évaluation de la charge en fonction des déformations du pneumatique, comme par exemple flèche, contreflèche, déradialisation des flancs. Ce type d'évaluation est particulièrement avantageux lors de l'utilisation d'une machine agricole à fort transfert ou à variation de charge, comme des semoirs dont la charge diminue à mesure que le travail est effectué, les remorques qui sont chargées à mesure que le travail est effectué, les emballeuses qui subissent un cycle chargement, déchargement pendant la réalisation du travail. Dans une application moins optimale, la charge peut être mesurée pour chaque essieu ou être fournie au système par l'utilisateur.

Une réalisation préférée est telle que les moyens de détermination d'une consigne de pression du système de télégonflage, comprennent les moyens de détermination du taux de glissement du pneumatique sur le sol de roulage. Dans la mesure où la consommation d'énergie du véhicule est la somme des énergies dissipées par résistance au roulement, résistance à l'avancement du sol et glissement, la connaissance du taux de glissement est un des paramètres permettant de calculer la pression optimale pour minimiser la consommation d'énergie. Il peut être avantageux de diminuer la pression et la vitesse pour diminuer la résistance à l'avancement d'un sol trop peu adhérent. L'énergie ainsi économisée compense l'augmentation de résistance au roulement. Le taux de glissement peut être estimé par comparaison entre la vitesse théorique donnée par la vitesse de rotation des roues et la vitesse réelle qui peut être estimée par radar, GPS, effet doppler.

Avantageusement le système de télégonflage est tel que les moyens de détermination des caractéristiques d'un outil tracté ou porté par le véhicule comprennent des moyens de lecture d'un identifiant d'un outil installé sur ledit véhicule et des moyens de l'association de cet identifiant aux caractéristiques de l'outil. Cet identifiant est donné par le fabriquant de l'outil ou celui du système de télégonflage au moyen d'un support d'information, hors, dans ou sur l'outil. L'identifiant peut être entré comme paramètre dans le système soit par l'utilisateur, soit lu par laser via un code barre ou par un capteur optique via un code barre matriciel dit QR code, ou via une puce d'identification par radio fréquence (RFID) placée dans l'outil avec un lecteur associé, ou être transmis via un bus de type CAN, permettant la transmission de données entre l'outil et le véhicule ou bien encore par un dispositif de communication proche de type NFC (Near Field Communication). Les moyens de lecture de l'identifiant de l'outil peuvent être du même type que ceux du pneumatique afin d'éviter la multiplication des moyens d'enregistrement des paramètres du système.

Il est particulièrement avantageux que les moyens de détermination d'une consigne de pression du système de télégonflage, comprenne les moyens de prise en compte des paramètres de gonflage préconisés par le fabricant du véhicule. Certains véhicules agricoles sont équipés d'essieux à monte de pneumatiques multiples. Selon la distance du pneumatique à l'axe de l'essieu, le fabricant préconise une pression différente afin d'optimiser la déformation de l'essieu. La valeur de la consigne préconisée est également fonction de la position d'un outil, selon qu'il est dans une position de transport ou de travail, comme pour les herses, les charrues, les épandeurs.

Un autre objet de l'invention est un procédé de détermination d'une consigne pour un dispositif de télégonflage d'un pneumatique, comprenant
- Une étape de détermination des caractéristiques d'un pneumatique dont la pression est destinée à être régulée par le dispositif de télégonflage,
- Une étape de détermination de la vitesse du véhicule,
- Une étape de calcul de la consigne de pression dudit pneumatique en fonction des caractéristiques dudit pneumatique et de la vitesse.
- Une étape de lecture d'un identifiant du pneumatique et une étape d'association de cet identifiant aux caractéristiques du pneumatique dans une base de données.

Il est avantageux que le procédé comprenne une étape de détermination d'au moins une caractéristique du sol de roulage dans la détermination de la consigne de pression de gonflage des pneumatiques.

Egalement avantageusement, le procédé comprend une étape d'enregistrement d'au moins une consigne du conducteur afin de lui permettre de choisir au moins le type d'optimisation qu'il désire :
- Sur le compactage du sol durant la tâche
- Sur la consommation d'énergie nécessaire à la réalisation de la tâche
- Sur la durée de la réalisation de la tâche
- Sur un optimum d'un de ces paramètres avec l'usage d'une limitation des autres ; par exemple la consommation d'énergie la plus faible pour une pression ne dépassant pas 1 bar.
Cette étape permet de prendre en compte des besoins du conducteur non intégré *a priori* dans le procédé de calcul de la consigne de pression du système de télégonflage.

Une solution avantageuse est que le procédé de détermination d'une consigne de pression pour un dispositif de télégonflage d'un pneumatique comprenne une étape de détermination des caractéristiques d'un outil installé sur le véhicule afin d'adapter les consignes de pression au type de travail de l'outil et à ses données techniques spécifiques.

Il est particulièrement avantageux que le procédé de détermination d'une consigne de pression pour un dispositif de télégonflage d'un pneumatique comprenne une étape de détermination de la charge appliquée au pneumatique.

Avantageusement le procédé de détermination d'une consigne de pression pour un dispositif de télégonflage d'un pneumatique comprend une étape de détermination du taux de glissement du pneumatique sur le sol de roulage.

Une solution préférée est que le procédé de détermination d'une consigne de pression pour un dispositif de télégonflage d'un pneumatique comprenne une étape de lecture d'un identifiant d'un outil installé sur ledit véhicule et de l'association de cet identifiant aux caractéristiques de l'outil.

Il est particulièrement avantageux que le procédé de détermination d'une consigne de pression pour un dispositif de télégonflage d'un pneumatique comprenne une étape de prise en compte des paramètres de gonflage préconisés par le fabricant du véhicule.

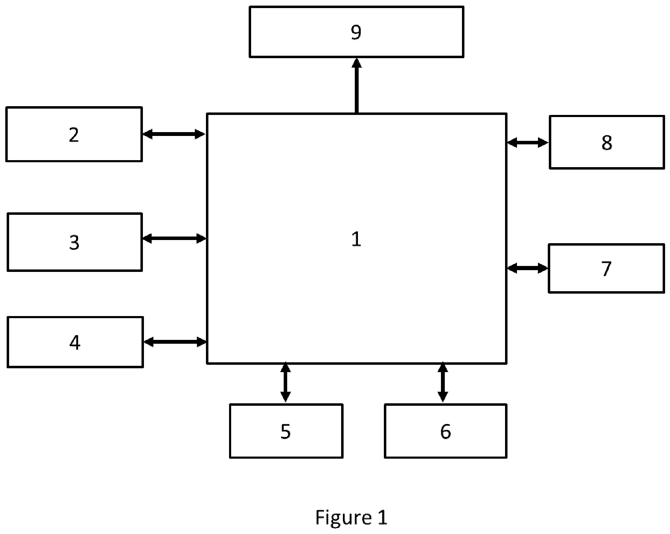

Les caractéristiques et autres avantages de l'invention seront mieux compris à l'aide de la figure 1 qui représente les données d'entrée et les consignes de sortie du calculateur 1 du système de télégonflage.

Les pneumatiques sont identifiés et leurs identifiants 2 sont enregistrés par le calculateur. Celui-ci interroge la base de données 3 des pneumatiques, soit située à distance et interrogée par un moyen de communication sans fil, soit interne au calculateur. Les identifiants des pneumatiques peuvent être également entrées par l'utilisateur. En réponse à la requête, la base de données des pneumatiques transmet au calculateur les caractéristiques des pneumatiques, nécessaires au calcul.

Les outils utilisés sont identifiés et leurs identifiants 4 sont enregistrés par le calculateur. Celui-ci interroge la base de données 5 des outils, soit située à distance et interrogée par un moyen de communication sans fil, soit interne au calculateur. La base de données des outils lui transmet les caractéristiques des outils nécessaires au calcul. L'outil peut être également entré comme un type d'outil de travail par l'utilisateur dans une gamme limitée.

Les données d'usage 6 comme par exemple la charge à l'essieu, la vitesse, le glissement, le couple, la position de l'outil et les caractéristiques du sol de roulage 7 sont enregistrées par le calculateur soit après une mesure par les capteurs adéquats embarqués, soit par une évaluation du conducteur. La vitesse est soit mesurée via le compteur de vitesse du véhicule, soit via une évaluation basée sur la géolocalisation (GPS), soit entrée comme une consigne moyenne de l'utilisateur sur un nombre réduit de choix comme par exemple « roulage route », « roulage chemin », « travail sol meuble ». Les caractéristiques du sol sont soit mesurées via des capteurs adéquats embarqués, soit entrées comme une consigne moyenne de l'utilisateur, telle que asphalte, terre damée, sol meuble. L'utilisateur entre le type de compromis de performance 8 souhaité comme par exemple :
- Pas de compactage du sol durant la tâche
- Consommation d'énergie nécessaire à la réalisation de la tâche, la plus faible
- Durée la plus faible de la réalisation de la tâche
- Optimum d'un de ces paramètres avec l'usage d'une limitation des autres ; par exemple la consommation d'énergie la plus faible pour une pression ne dépassant pas 1 bar.

A partir de ces données, le calculateur délivre des consignes de pression 9 au système de télégonflage pour chaque pneumatique intégré au système. Le système de télégonflage délivre la pression donnée par les consignes. Cette consigne change à chaque changement du système, soit de pneumatiques, d'outils, de paramètres d'usage, par exemple du type de sol, de la vitesse, de l'optimum souhaité, de la position de l'outil.

L'invention a été réalisée sur un tracteur de 250 chevaux attelé à une charrue pour labourer des parcelles de 10 hectares situées en plaine sur un terrain de type argileux. Le labour est précédé d'une conduite d'approche de 10 Km et d'un retour à la ferme également de 10 km, cette conduite se fait à une vitesse de 40 km/h. La charge du véhicule est de 12000 kg. L'effort de traction à transmettre à la charrue durant ce travail est de 6000 daN. Les pneumatiques équipant le véhicule sont des pneumatiques de dimension 600/65R28 à l'avant et de dimension 710/70 R38 à l'arrière. Ces pneumatiques peuvent, selon les fabricants, être utilisés à une pression comprise entre 0,4 et 2,4 bars.

Dans l'expérience selon l'invention, le conducteur lit une puce d'identification par radio fréquence (RFID) mise en place à la réalisation du pneumatique avec un lecteur adéquat. Le processeur enregistre l'identifiant et télécharge, depuis un site dédié, les données du pneumatique, dont la courbe de charge et pression pour une pression comprise entre 0,4 et 2,4 bars. Il calcule ensuite, en temps réel la pression optimale instantanée et active le système de régulation de pression en conséquence.

Par rapport à un cycle à pression constante de 1,4 bar, l'invention, par un pilotage en continu de la pression entre les limites de 0,4 et 2,4 bars fixées par les capacités des pneumatiques, permet une diminution de la consommation de l'ordre de 10% et/ou une puissance potentiellement disponible supplémentaire pour maintenir la vitesse dans le cas de franchissement de côtes.

Sur la partie de travail en champ, un gain de 5% de productivité (en hectares travaillés par heure) est obtenu ainsi qu'une réduction de la consommation de 15% par diminution de la déformation du sol et du glissement entre le sol et le pneumatique. Des diminutions du compactage du sol, de l'ordre de 50%, mesurées au moyen d'une sonde-pénétromètre dotée d'un embout de 1,25 cm, sont obtenues et visibles par l'amélioration du rendement agronomique.

L'expérience selon l'état de la technique avec une optimisation de la vitesse de glissement de 12% sans tenir compte des données pneumatiques qui est un critère possible d'optimisation de l'usage d'un véhicule agricole préconisé par l'art antérieur est inapplicable sur la partie routière du cycle.

Par rapport à un système pré-configuré où le roulage est effectué à une pression égal à 1,6 bar sur route et 0,8 bar en champ pour intégrer la totalité de l'offre pneumatique sur le marché, le système de télégonflage selon l'invention, utilisant toute la plage des pressions autorisées par le fabricant du pneumatique identifié, permet une diminution de la consommation d'énergie de l'ordre de 5% et une diminution du compactage du sol de l'ordre de 30%.

## Revendications

1. Un système de télégonflage pour véhicule agricole équipé de pneumatiques, comprenant :
- Au moins un dispositif de télégonflage d'un pneumatique et
- Des moyens de détermination d'une consigne de pression (9) pour le dispositif de télégonflage
- Des moyens de détermination de la vitesse du véhicule,
- Des moyens de calcul (1) de la consigne de pression dudit pneumatique en fonction des caractéristiques dudit pneumatique et de la vitesse.
**caractérisé en ce que** les moyens de détermination d'une consigne de pression (9) comprennent :
- Des moyens de détermination des caractéristiques du pneumatique dont la pression est destinée à être régulée par le dispositif de télégonflage,
- Les moyens de détermination des caractéristiques d'un pneumatique comprennent des moyens de lecture d'un identifiant (2) du pneumatique et des moyens d'association de cet identifiant (2) aux caractéristiques du pneumatique enregistrées dans une base de données (3).

2. Un système de télégonflage selon la revendication 1 dans lequel les moyens de détermination d'une consigne de pression (9) pour le dispositif de télégonflage comprennent en outre des moyens de détermination d'au moins une caractéristique du sol de roulage (7).

3. Un système de télégonflage selon l'une des revendications 1 à 2 dans lequel les moyens de détermination d'une consigne de pression (9) pour le dispositif de télégonflage comprennent en outre des moyens d'enregistrement d'au moins une consigne d'un conducteur du véhicule.

4. Un système de télégonflage selon l'une des revendications 1 à 3 dans lequel les moyens de détermination d'une consigne de pression (9) pour le dispositif de télégonflage comprennent en outre des moyens de détermination des caractéristiques d'un outil installé sur ledit véhicule.

5. Un système de télégonflage selon l'une des revendications 1 à 4 dans lequel les moyens de détermination d'une consigne de pression (9) pour le dispositif de télégonflage comprennent en outre des moyens de détermination de la charge appliquée au pneumatique.

6. Un système de télégonflage selon l'une des revendications 1 à 5 dans lequel les moyens de détermination d'une consigne de pression (9) pour le dispositif de télégonflage comprennent en outre des moyens de détermination du taux de glissement du pneumatique sur le sol de roulage.

7. Un système de télégonflage selon la revendication 4 dans lequel les moyens de détermination des caractéristiques d'un outil comprennent des moyens de lecture d'un identifiant (4) d'un outil installé sur ledit véhicule et des moyens de l'association de cet identifiant (4) aux caractéristiques de l'outil.

8. Un système de télégonflage selon l'une des revendications 1 à 7 dans lequel les moyens de détermination d'une consigne de pression (9) pour le dispositif de télégonflage comprennent en outre des moyens de prise en compte des paramètres de gonflage préconisés par le fabricant du véhicule.

9. Un procédé de détermination d'une consigne pour un dispositif de télégonflage d'un pneumatique, comprenant :
- Une étape de détermination des caractéristiques d'un pneumatique dont la pression est destinée à être régulée par le dispositif de télégonflage,
- Une étape de détermination de la vitesse du véhicule,
- Une étape de calcul de la consigne de pression (9) dudit pneumatique en fonction des caractéristiques dudit pneumatique et de la vitesse, déterminées au cours des étapes précédentes.
- Une étape de lecture d'un identifiant (2) du pneumatique et une étape d'association de cet identifiant aux caractéristiques du pneumatique dans une base de données (3).

10. Un procédé de détermination d'une consigne pour un dispositif de télégonflage d'un pneumatique selon la revendication 9, comprenant une étape de détermination d'au moins une caractéristique du sol de roulage (7).

11. Un procédé de détermination d'une consigne pour un dispositif de télégonflage d'un pneumatique selon l'une des revendications 9 à 10, comprenant une étape d'enregistrement d'au moins une consigne du conducteur.

12. Un procédé de détermination d'une consigne pour un dispositif de télégonflage d'un pneumatique selon l'une des revendications 9 à 11, comprenant une étape de détermination des caractéristiques d'un outil installé sur le véhicule.

13. Un procédé de détermination d'une consigne pour un dispositif de télégonflage d'un pneumatique selon l'une des revendications 9 à 12, comprenant une étape de détermination de la charge appliquée au pneumatique.

14. Un procédé de détermination d'une consigne pour un dispositif de télégonflage d'un pneumatique selon l'une des revendications 9 à 13, comprenant une étape de détermination du taux de glissement du pneumatique sur le sol de roulage.

15. Un procédé de détermination d'une consigne pour un dispositif de télégonflage d'un pneumatique selon l'une des revendications 9 à 14, comprenant une étape de lecture d'un identifiant (4) d'un outil installé sur ledit véhicule et de l'association de cet identifiant (4) aux caractéristiques de l'outil.

16. Un procédé de détermination d'une consigne pour un dispositif de télégonflage d'un pneumatique selon l'une des revendications 9 à 15, comprenant une étape de prise en compte des paramètres de gonflage préconisés par le fabricant du véhicule.

## Patentansprüche

1. Reifendruckregelsystem für ein mit Luftreifen ausgestattetes landwirtschaftliches Fahrzeug, das enthält:
- mindestens eine Reifendruckregelvorrichtung eines Luftreifens und
- Einrichtungen zur Bestimmung eines Drucksollwerts (9) für die Reifendruckregelvorrichtung,
- Einrichtungen zur Bestimmung der Geschwindigkeit des Fahrzeugs,
- Einrichtungen zur Berechnung (1) des Drucksollwerts des Luftreifens abhängig von den Merkmalen des Luftreifens und der Geschwindigkeit,
**dadurch gekennzeichnet, dass** die Bestimmungseinrichtungen eines Drucksollwerts (9) enthalten:
- Einrichtungen zur Bestimmung der Merkmale des Luftreifens, dessen Druck von der Reifendruckregelvorrichtung geregelt werden soll,
- die Einrichtungen zur Bestimmung der Merkmale eines Luftreifens enthalten Einrichtungen zum Lesen einer Kennung (2) des Luftreifens und Einrichtungen zur Zuordnung dieser Kennung (2) zu den Merkmalen des Luftreifens, die in einer Datenbank (3) gespeichert sind.

2. Reifendruckregelsystem nach Anspruch 1, wobei die Einrichtungen zur Bestimmung eines Drucksollwerts (9) für die Reifendruckregelvorrichtung außerdem Einrichtungen zur Bestimmung mindestens eines Merkmals des Fahrbodens (7) enthalten.

3. Reifendruckregelsystem nach einem der Ansprüche 1 bis 2, wobei die Einrichtungen zur Bestimmung eines Drucksollwerts (9) für die Reifendruckregelvorrichtung außerdem Einrichtungen zum Speichern mindestens eines Sollwerts eines Fahrers des Fahrzeugs enthalten.

4. Reifendruckregelsystem nach einem der Ansprüche 1 bis 3, wobei die Einrichtungen zur Bestimmung eines Drucksollwerts (9) für die Reifendruckregelvorrichtung außerdem Einrichtungen zur Bestimmung der Merkmale eines in das Fahrzeug eingebauten Werkzeugs enthalten.

5. Reifendruckregelsystem nach einem der Ansprüche 1 bis 4, wobei die Einrichtungen zur Bestimmung eines Drucksollwerts (9) für die Reifendruckregelvorrichtung außerdem Einrichtungen zur Bestimmung der auf den Luftreifen angewendeten Last enthalten.

6. Reifendruckregelsystem nach einem der Ansprüche 1 bis 5, wobei die Einrichtungen zur Bestimmung eines Drucksollwerts (9) für die Reifendruckregelvorrichtung außerdem Einrichtungen zur Bestimmung der Schlupfrate des Luftreifens auf dem Fahrboden enthalten.

7. Reifendruckregelsystem nach Anspruch 4, wobei die Einrichtungen zur Bestimmung des Merkmale eines Werkzeugs Einrichtungen zum Lesen einer Kennung (4) eines in das Fahrzeug eingebauten Werkzeugs und Einrichtungen der Zuordnung dieser Kennung (4) zu den Merkmalen des Werkzeugs enthalten.

8. Reifendruckregelsystem nach einem der Ansprüche 1 bis 7, wobei die Einrichtungen zur Bestimmung eines Drucksollwerts (9) für die Reifendruckregelvorrichtung außerdem Einrichtungen zur Berücksichtigung der vom Hersteller des Fahrzeugs empfohlenen Befüllungsparameter enthalten.

9. Verfahren zur Bestimmung eines Sollwerts für eine Reifendruckregelvorrichtung eines Luftreifens, das enthält:
- einen Schritt der Bestimmung der Merkmale eines Luftreifens, dessen Druck von der Reifendruckregelvorrichtung geregelt werden soll,
- einen Schritt der Bestimmung der Geschwindigkeit des Fahrzeugs,
- einen Schritt des Berechnens des Drucksollwerts (9) des Luftreifens abhängig von den Merkmalen des Luftreifens und der Geschwindigkeit, die während der vorhergehenden Schritte bestimmt werden,
- einen Schritt des Lesens einer Kennung (2) des Luftreifens und einen Schritt der Zuordnung dieser Kennung zu den Merkmalen des Luftreifens in einer Datenbank (3).

10. Verfahren zur Bestimmung eines Sollwerts für eine Reifendruckregelvorrichtung eines Luftreifens nach Anspruch 9, das einen Schritt der Bestimmung mindestens eines Merkmals des Fahrbodens (7) enthält.

11. Verfahren zur Bestimmung eines Sollwerts für eine Reifendruckregelvorrichtung eines Luftreifens nach einem der Ansprüche 9 bis 10, das einen Schritt des Speicherns mindestens eines Sollwerts des Fahrers enthält.

12. Verfahren zur Bestimmung eines Sollwerts für eine Reifendruckregelvorrichtung eines Luftreifens nach einem der Ansprüche 9 bis 11, das einen Schritt der Bestimmung der Merkmale eines in das Fahrzeug eingebauten Werkzeugs enthält.

13. Verfahren zur Bestimmung eines Sollwerts für eine Reifendruckregelvorrichtung eines Luftreifens nach einem der Ansprüche 9 bis 12, das einen Schritt der Bestimmung der auf den Luftreifen angewendeten Last enthält.

14. Verfahren zur Bestimmung eines Sollwerts für eine Reifendruckregelvorrichtung eines Luftreifens nach einem der Ansprüche 9 bis 13, das einen Schritt der Bestimmung der Schlupfrate des Luftreifens auf dem Fahrboden enthält.

15. Verfahren zur Bestimmung eines Sollwerts für eine Reifendruckregelvorrichtung eines Luftreifens nach einem der Ansprüche 9 bis 14, das einen Schritt des Lesens einer Kennung (4) eines in das Fahrzeug eingebauten Werkzeugs und der Zuordnung dieser Kennung (4) zu den Merkmalen des Werkzeugs enthält.

16. Verfahren zur Bestimmung eines Sollwerts für eine Reifendruckregelvorrichtung eines Luftreifens nach einem der Ansprüche 9 bis 15, das einen Schritt der Berücksichtigung der vom Hersteller des Fahrzeugs empfohlenen Befüllungsparameter enthält.

## Claims

1. Tyre pressure regulation system for an agricultural vehicle equipped with tyres, comprising:
- at least one device for regulating the pressure of a tyre, and
- means for determining a pressure setpoint for the tyre pressure regulation device,
- means for determining the speed of the vehicle,
- means for calculating (1) the pressure setpoint of said tyre depending on the characteristics of said tyre and on the speed,
**characterized in that** the means for determining a pressure setpoint comprise:
- means for determining the characteristics of the tyre, the pressure of which is intended to be regulated by the tyre pressure regulation device,
- the means for determining the characteristics of a tyre comprising means for reading an identifier (2) of the tyre and means for associating this identifier (2) with the characteristics of the tyre that are recorded in a database (3).

2. Tyre pressure regulation system according to Claim 1, in which the means for determining a pressure setpoint (9) for the tyre pressure regulation device further comprise means for determining at least one characteristic of the running surface (7).

3. Tyre pressure regulation system according to either of Claims 1 and 2, in which the means for determining a pressure setpoint (9) for the tyre pressure regulation device further comprise means for recording at least one setpoint of a driver of the vehicle.

4. Tyre pressure regulation system according to one of Claims 1 to 3, in which the means for determining a pressure setpoint (9) for the tyre pressure regulation device further comprise means for determining the characteristics of a tool installed on said vehicle.

5. Tyre pressure regulation system according to one of Claims 1 to 4, in which the means for determining a pressure setpoint (9) for the tyre pressure regulation device further comprise means for determining the load applied to the tyre.

6. Tyre pressure regulation system according to one of Claims 1 to 5, in which the means for determining a pressure setpoint (9) for the tyre pressure regulation device further comprise means for determining the rate of slip of the tyre on the running surface.

7. Tyre pressure regulation system according to Claim 4, in which the means for determining the characteristics of a tool comprise means for reading an identifier (4) of a tool installed on said vehicle and means for associating this identifier (4) with the characteristics of the tool.

8. Tyre pressure regulation system according to one of Claims 1 to 7, in which the means for determining a pressure setpoint (9) for the tyre pressure regulation device further comprise means for taking into account the inflation parameters recommended by the manufacturer of the vehicle.

9. Method for determining a setpoint for a device for regulating the pressure of a tyre, comprising:
- a step of determining the characteristics of a tyre, the pressure of which is intended to be regulated by the tyre pressure regulation device,
- a step of determining the speed of the vehicle,
- a step of calculating the pressure setpoint (9) of said tyre depending on the characteristics of said tyre and the speed, which are determined in the preceding steps,
- a step of reading an identifier (2) of the tyre and a step of associating this identifier with the characteristics of the tyre in a database (3).

10. Method for determining a setpoint for a device for regulating the pressure of a tyre according to Claim 9, comprising a step of determining at least one characteristic of the running surface (7).

11. Method for determining a setpoint for a device for regulating the pressure of a tyre according to either of Claims 9 and 10, comprising a step of recording at least one setpoint of the driver.

12. Method for determining a setpoint for a device for regulating the pressure of a tyre according to one of Claims 9 to 11, comprising a step of determining the characteristics of a tool installed on the vehicle.

13. Method for determining a setpoint for a device for regulating the pressure of a tyre according to one of Claims 9 to 12, comprising a step of determining the load applied to the tyre.

14. Method for determining a setpoint for a device for regulating the pressure of a tyre according to one of Claims 9 to 13, comprising a step of determining the rate of slip of the tyre on the running surface.

15. Method for determining a setpoint for a device for regulating the pressure of a tyre according to one of Claims 9 to 14, comprising a step of reading an identifier (4) of a tool installed on said vehicle and of associating this identifier (4) with the characteristics of the tool.

16. Method for determining a setpoint for a device for regulating the pressure of a tyre according to one of Claims 9 to 15, comprising a step of taking into account the inflation parameters recommended by the manufacturer of the vehicle.
